# EUROPÄISCHE PATENTSCHRIFT

(11) **EP 1 293 362 B1**
(45) Veröffentlichungstag und Bekanntmachung des Hinweises auf die Patenterteilung: **05.09.2007**
(21) Anmeldenummer: 02014401.0
(22) Anmeldetag: 28.06.2002
(51) Int. Cl.: B60C 23/06

(54) **Verfahren zur Bestimmung des Reifenluftdrucks und der Radlast von Fahrzeugreifen**
Process to determine the tire air pressure and the wheel load of vehicle tires
Procédé pour déterminer la pression d'air et la charge de roue de pneumatiques de véhicule

(30) Priorität: 18.09.2001 DE 10146031
(43) Veröffentlichungstag der Anmeldung: 19.03.2003
(73) Patentinhaber: Continental Aktiengesellschaft, 30165 Hannover (DE); Siemens AG, 80339 München (DE); Bayerische Motoren Werke Aktiengesellschaft, 80809 München (DE)
(72) Erfinder: Köbe, Andreas, Dr., 64625 Bensheim (DE); Prenninger, Martin, Dr., 93051 Regensburg (DE); Strothjohann, Thomas, 64747 Breuberg (DE); Schmid, Florian, 64287 Darmstadt (DE)

(56) Entgegenhaltungen:
- EP-A- 0 887 211
- US-A- 5 749 984

## Beschreibung

Die Erfindung betrifft ein Verfahren zur Bestimmung des Reifenluftdrucks und der Radlast von Fahrzeugreifen durch Auswertung der von mindestens einem im Fahrzeugreifen eingebetteten Verformungssensor gelieferten Messsignale, beispielsweise gemäß Dokument US 5,749,984.

Der Reifenluftdruck und die Radlast stellen Messwerte dar, deren Kenntnis für die Fahrsicherheit und für die Steuerung von Fahrzeugregelsystemen wesentlich sind. Ein der jeweiligen Fahrsituation, insbesondere hinsichtlich Radiast und Geschwindigkeit angepasster Reifenluftdruck ist für die aktive Sicherheit des Fahrzeugs sehr wesentlich. Sowohl ein Überluftdruck als auch ein Unterluftdruck verschlechtern die Fahreigenschaften des Fahrzeugs. Unterluftdruck verringert die Lebensdauer des Fahrzeugreifens und kann zu Unfällen durch Reifenschäden führen.

Auch als "pannensicher" bezeichnete Fahrzeugreifen, die es ermöglichen, eine begrenzte Fahrstrecke mit verminderter Fahrgeschwindigkeit bei völligem Druckverlust im Fahrzeugreifen zurückzulegen, machen es erforderlich, Maßnahmen zur Warnung bei Abfall des Reifenluftdrucks vorzusehen, weil die durch den Druckverlust verursachte Änderung der Fahrverhaltens von vielen Fahrern oftmals nicht bemerkt wird.

Die Radlast ist einerseits eine Bestimmungsgröße für den erforderlichen Luftdruck; andererseits ist die Kenntnis der Radlast für die Steuerung von Fahrzeugregelsystemen notwendig oder zumindest sehr nützlich, insbesondere wenn diese Fahrzeugregelsysteme die Verteilung der Bremskräfte bzw. Bremseneingriffe auf die einzelnen Räder des Fahrzeugs bewirken. Auch für die Funktion von Aktiven Fahrwerken und Aktiven Lenkungen ist die Kenntnis der Radlast wichtig,

Bei den meisten Kraftfahrzeugen besteht keine Möglichkeit, den Reifenluftdruck oder die Radlast während der Fahrt zu überwachen. Zwar werden für einige Personenkraftwagen der Oberklasse Überwachungssysteme für den Reifenluftdruck als Sonderausstattung angeboten. Hierbei messen Luftdrucksensoren im Reifen den Luftdruck; eine Sendeelektronik übermittelt das Messergebnis drahtlos in das Fahrzeug. Diese Überwachungssysteme sind aufwendig und teuer und berücksichtigen nicht den jeweiligen Beladungszustand des Fahrzeugs.

Bei militärischen Fahrzeugen sind Reifenluftdruck-Regelsysteme bekannt. Hierbei besteht eine drehbare Luftdruckverbindung zwischen dem Reifeninnenraum und einem Druckregler im Fahrzeug, so dass eine Messung und Änderung des Reifenluftdrucks während der Fahrt möglich ist. Diese Regelsysteme sind jedoch sehr aufwendig und teuer und kommen daher für den Bereich ziviler Fahrzeuge auf absehbare Zeit nicht in Frage. Auch hierbei wird der Beladungszustand des Fahrzeugs nicht berücksichtigt.

Die Radlast wird teilweise indirekt über die Messung der Einfederwege bestimmt. Bei luftgefederten Fahrzeugen, insbesondere bei Lastkraftwagen, kann die Radlast über die Messung der Luftfederdrücke bei bestimmter Einfederung ermittelt werden. Bei beiden Systemen liegen Hysteresekräfte sowie die erheblichen Massen der bewegten Achsteile in der Messstrecke, so dass sich insbesondere bei dynamischen Änderungen Verfälschungen der Messwerte gegenüber den tatsächlich wirkenden Kräften in der Reifenaufstanzfläche nicht vermeiden lassen.

Bekannt sind in die Lauffläche von Fahrzeugreifen eingebettete Verformungssensoren (DE 39 37 966, DE 196 46 235, DE 42 42 726, DE 43 35 938). Bekannte Verformungssensoren für Fahrzeugreifen (DE 198 07 004) sind als Oberflächenwellensensoren ausgeführt.

Durch die Auswertung der beim Durchlauf der Verformungssensoren durch den Reifenlatsch erhaltenen Signalveriäufe lassen sich zahlreiche der am Fahrzeugreifen wirkenden Kräfte und anderer Bedingungen ermitteln. Der Reifenluftdruck und die Radlast waren hierbei jedoch bisher nicht getrennt zu ermitteln, d. h. einer dieser beiden Werte musste bekannt sein, um den anderen Wert bestimmen zu können.

Aufgabe der Erfindung ist es daher, ein Verfahren der eingangs genannten Gattung zu schaffen, den Reifenluftdruck und die Radlast absolut und unabhängig voneinander während der Fahrt fortlaufend zu ermitteln.

Unter Auswertung der von einem im Fahrzeugreifen eingebetteten Verformungssensor gelieferten Messsignale wird diese Aufgabe erfindungsgemäß durch die Verfahrensschritte gemäß Patentanspruch 1 gelöst.

Nachdem die für den jeweiligen einzelnen Reifen, in der Praxis jedoch für baugleiche Fahrzeugreifen (in diesem Zusammenhang als "Reifentyp" bezeichnet) die erforderlichen Kennfelder K1, K2 und K3 ermittelt und abgespeichert wurden, werden bei der aktuellen Messung im Betrieb die jeweiligen Signalverläufe beim Durchlauf des Verformungssensors durch den Reifenlatsch erfasst und daraus zwei typische und mit hoher Zuverlässigkeit erfassbare Werte ermittelt, nämlich die Signalkurvenbreite s₁ zwischen einem typischen Anstieg und einem typischen Abfall der Signalkurve und das jeweilige Amplitudenminimum a₁ am Anfang und a₁' am Ende eines Durchlaufs des Verformungssensors durch den Reifenlatsch. Mit diesen Werten werden aus den abgespeicherten Kennfeldern gesondert und unabhängig voneinander die Radlast r₁ und der Reifenluftdruck d₁ ermittelt.

Die Erfindung wird nachfolgend an einem Ausführungsbeispiel näher erläutert, das in der Zeichnung dargestellt ist.

Es zeigt:
Fig. 1 eine Messanordnung zur Bestimmung der Reifenluftdrucks und der Radlast von Fahrzeugreifen in vereinfachter Darstellungsweise,
Fig.2 den typischen Signalverlauf eines in der Lauffläche eines Fahrzeugreifens eingebetteten Verformungssensors beim Durchlauf durch den Reifenlatsch,
Fig. 3 - 6 vereinfachte Darstellungen von Kennfeldern, die zur Vorbereitung des erfindungsgemäßen Bestimmungsverfahrens ermittelt wurden.

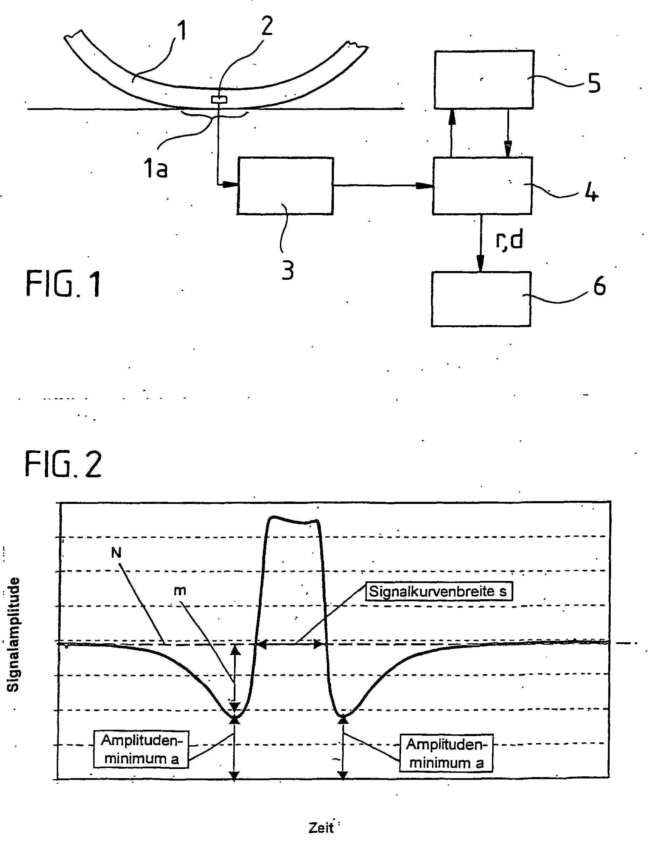

Wie in Fig. 1 stark vereinfacht dargestellt ist, ist in der Lauffläche eines Fahrzeugreifens 1 ein Verformungssensor 2 eingebettet, beispielsweise ein bekannter Verformungssensor der Oberflächenwellen-Bauart. Der Verformungssensor 2 ist als Funksensor ausgeführt und liefert auf drahtlosem Weg ein der jeweiligen Laufflächenverformung, insbesondere in Umfangsrichtung, entsprechendes Signal an einen Signalempfänger 3, der es an einen Auswerterechner 4 weiterleitet. In einem Kennfeldspeicher 5 sind mehrere, nachfolgend noch näher erläuterte Kennfelder gespeichert. Ausgehend von den erhaltenen Signalen verwendet der Auswerterechner 4 die im Kennfeldspeicher 5 gespeicherten Kennfelder zur Ermittlung der Messgrößen der Radlast r und des Reifenluftdrucks d, die er an eine Einrichtung 6 zur Anzeige, Speicherung und/oder Weiterverwendung in Fahrdynamikregelsystemen od. dgl. liefert.

Fig. 2 zeigt den typischen Signalverlauf des vom Verformungssensor 2 gelieferten Signals. Darin ist die Signalamplitude über der Zeit aufgetragen.

Im unbelasteten Zustand weit vor dem Einlauf des Verformungssensors 2 in den Reifenlatsch la des Fahrzeugreifens 1 liegt das erhaltene Signal auf einer Signalhöhe N. Im Bereich vor dem Einlauf in den Reifenlatsch la fällt das Signal ab und erreicht ein Amplitudenminimum a. Bei Beginn des Einlaufs in den Reifenlatsch steigt das Signal steil an, um am Ende des Durchlaufs durch den Reifenlatsch wieder steil abzufallen. Die Signalkurvenbreite s zwischen den beiden hier vereinfacht als "Nulldurchgänge" bezeichneten Durchgängen durch die Linie N der unbelasteten Signalhöhe stellt einen für den Signalverlauf typischen Wert dar. Nach dem Durchlauf durch den Reifenlatsch 1a fällt das Signal wieder auf ein Amplitudenminimum a' ab. Für die Auswertung des Signalverlaufs kann sowohl das linke Amplitudenminimum a als auch das rechte Amplitudenminimum a' oder deren Summe oder die Differenz m zu der unbelasteten Signalhöhe N verwendet werden, Der einfacheren Darstellung halber wird im folgenden deshalb allgemein von einem Amplitudenminimum a gesprochen.

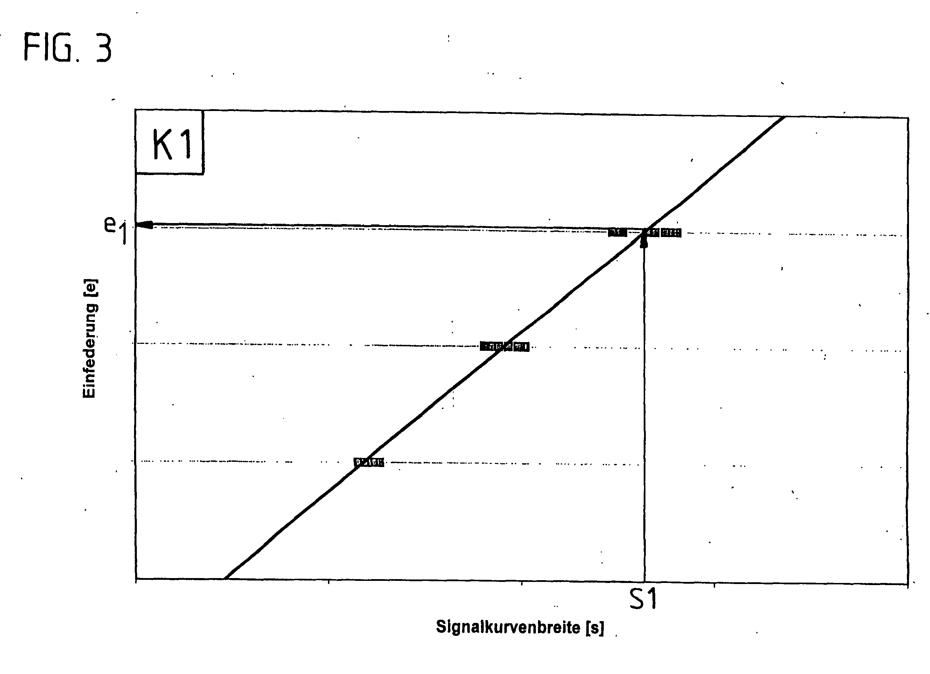

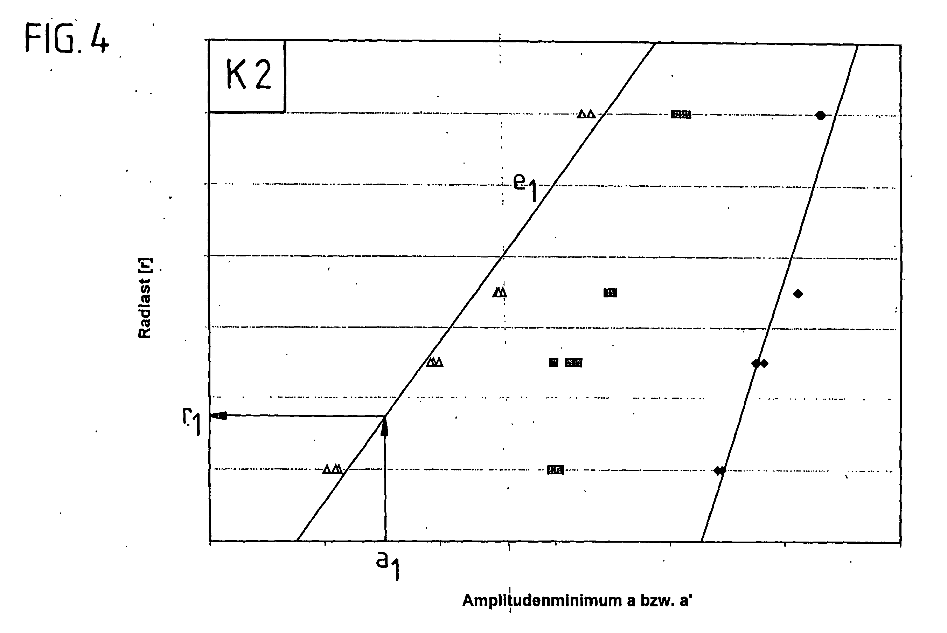

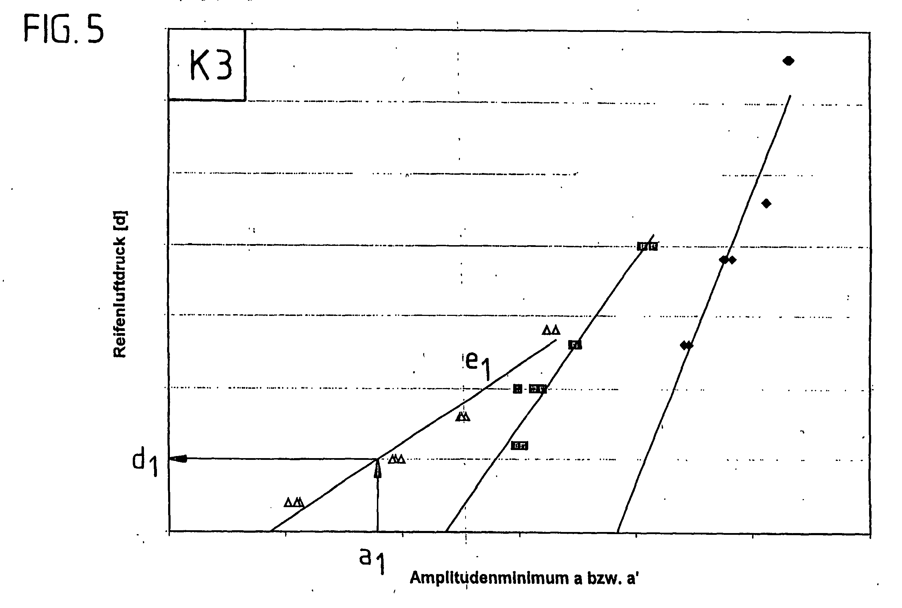

Um aus den im praktischen Betrieb bestimmten Werten der Signalkurvenbreite s und des Amplitudenminimums a auf den Reifenluftdruck d und die Radlast r schließen zu können, werden für einen vorgegebenen Reifentyp unter Variation und Messung des Reifenluftdrucks d, der Radlast r und der Einfederung e die jeweiligen Signalverläufe beim Durchlauf des Verformungssensors 2 durch den Reifenlatsch la aufgenommen und die Signalkurvenbreiten s zwischen Nulldurchgängen des Signalverlaufs sowie die Amplitudenminima a bzw. a' des Signalverlaufs aufgenommen. Aus diesen ermittelten Daten werden sodann die folgenden Kennfelder K1 K2 und K3 gewonnen und im Kennfeldspeicher 5 abgelegt:
Das Kennfeld K1 (Fig. 3) enthält die Einfederung e über der Signalkurvenbreite s. Das Kennfeld K2 (Fig. 4) enthält die Radlast r über den Amplitudenminima a bzw. a'. Statt dessen kann auch die Einfederung über der Differenz M zur unbelasteten Signalhöhe N oder der Summe der beiden Amplitudenmaxima a und a' aufgetragen sein. Das Kennfeld K3 (Fig. 5) enthält den Reifenluftdruck d über den Amplitudenminima a bzw. a'.

Nachdem diese Kennfelder K1, K2 und K3 im Kennfeldspeicher 5 abgelegt sind, ist die Messeinrichtung zur Durchführung einzelner Messvorgänge im Betrieb bereit. Beim aktuellen Messvorgang wird zunächst aus der bestimmten ermittelten Signalkurvenbreite s₁ im Kennfeld K1 die zugeordnete Einfederung e₁ bestimmt. Aus dem gemessenen Amplitudenminimum a₁ des Signalverlaufs wird im Kennfeld K2 für die festgestellte Einfederung e₁ die Radlast r₁ ermittelt. Im Kennfeld K3 wird sodann aus diesem Amplitudenminimum a₁ des Signalverlaufs für die festgestellte Einfederung e₁ der Reifenluftdruck d₁ bestimmt.

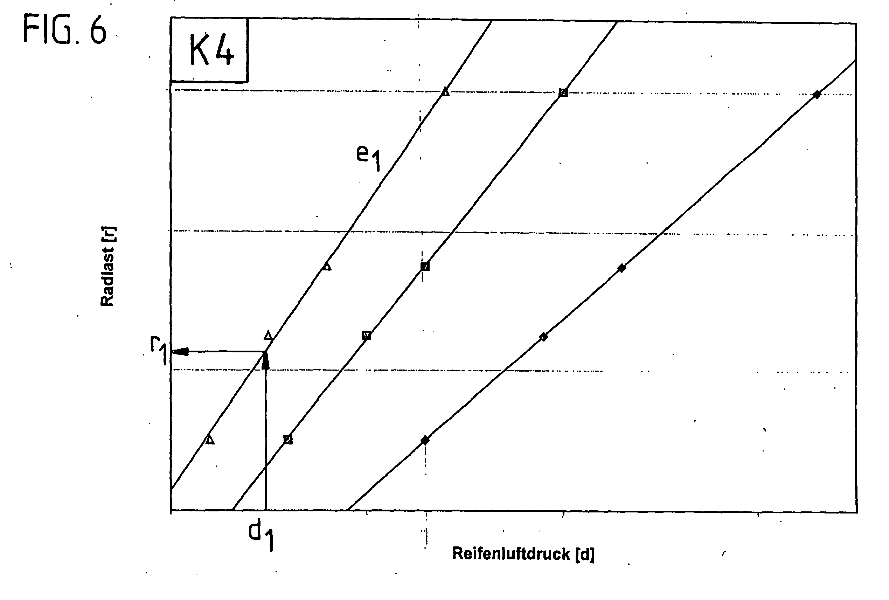

Zusätzlich kann bei der Vorbereitung ein weiteres Kennfeld K4 (Fig. 6) aufgenommen werden, das die Radlast r über dem Reifenluftdruck d zeigt. Beim aktuellen Messvorgang wird zu der jeweiligen Einfederung e₁ aus der ermittelten Radlast r₁ der Reifenluftdruck d₁ bestimmt. Dies stellt eine Möglichkeit zur Überprüfung der Plausibilität der einzeln gewonnenen Werte für die Einfederung e, die Radlast r und den Reifenluftdruck d dar.

Aus dem Amplitudenmininum a bzw. a', das vor und/oder nach dem Durchlaufen des Reifenlatsches la als Maß für die dort vorliegende Laufflächenverformung gewonnen wird, lassen sich sowohl der augenblicklich herrschende Reifenluftdruck d als auch gesondert und unabhängig davon die Radlast r ermitteln. Die alternative Verwendung der Differenz m (Fig. 2) zwischen dem Amplitudenminimum a und der unbelasteten Signalhöhe N als Führungsgröße stellt sogar eine messtechnisch vorteilhaftere Möglichkeit dar. Der Reifenluftdruck d und die Radlast r sind als Flächen im Raum über der Ebene "Breite s des Signalverlaufs" entsprechend der Einfederung e und "Höhe des Amplitudenminimums a" entsprechend der Laufflächenverformung vor bzw. vor und nach Durchlaufen des Reifenlatsches darstellbar.

Es hat sich gezeigt, dass die Signalkurvenbreite s weitestgehend von der Einfederung e abhängt, während die Amplitudenminima a bzw. a' noch von anderen Einflussgrößen abhängig sind, im wesentlichen von Antriebs- und Bremskräften. Zweckmäßigerweise wird für die erste Ermittlung der Signalkurvenbreite s deshalb ein weitgehend freirollender Zustand gewählt.

Unter der Annahme, dass sich der Reifenluftdruck d kurzfristig (d. h. beispielsweise innerhalb von einigen 100 m Fahrstrecke) nicht wesentlich ändert, lassen sich mit der gemessenen Einfederung e auch in dynamischen Fahrsituationen die aktuellen (dynamischen) Radlasten r bestimmen. Umgekehrt lässt sich ein starker Abfall des Reifenluftdrucks auch in dynamischen Situationen zuverlässig feststellen, da die dann stark steigende Einfederung e einer unerwartet hohen Zunahme der Radlast r (nur an dem betroffenen Rad) entsprechen müsste. Dieser auch im Auswerterechner erkennbare Widerspruch lässt sich zuverlässig als Druckverlust deuten.

## Patentansprüche

1. Verfahren zur Bestimmung des Reifenluftdrucks und der Radlast von Fahrzeugreifen durch Auswertung der von mindestens einem im Fahrzeugreifen eingebetteten Verformungssensor gelieferten Messsignale, **gekennzeichnet durch** die Verfahrensschritte:
A) für einen vorgegebenen Reifentyp werden unter Variation und Messung des Reifenluftdrucks, der Radlast und der Einfederung die jeweiligen Signalverläufe beim Durchlauf des Verformungssensors **durch** den Reifenlatsch aufgenommen und die Signalkurvenbreiten (s) zwischen Nulldurchgängen des Signalverlaufs sowie die Amplitudenminima (a) des Signalverlaufs aufgenommen;
B) aus den ermittelten Daten werden die folgenden Kennfelder gewonnen:
K1) Einfederung (e) über der Signalkurvenbreite (s);
K2) Radlast (r) über den Amplitudenminima (a);
K3) Reifenluftdruck (d) über den Amplitudenminima (a);
C) beim aktuellen Messvorgang wird
C1) aus der Signalkurvenbreite (s₁) im Kennfeld K1 die Einfederung (e₁) bestimmt;
C2) aus dem Amplitudenminimum (a₁) des Signalverlaufs wird im Kennfeld K2 für die festgestellte Einfederung (e₁) die Radlast (r₁) ermittelt;
C3) aus dem Amplitudenminimum (a₁) des Signalverlaufs wird im Kennfeld K3 für die festgestellte Einfederung (e₁) der Reifenluftdruck (d₁) bestimmt.

2. Verfahren nach Anspruch 1, **dadurch gekennzeichnet, dass** im Verfahrensschritt B) zusätzlich ein Kennfeld K4 der Radlast (r) über dem Reifenluftdruck (d) aufgenommen wird und dass im Verfahrensschritt C zu der jeweiligen Einfederung (e₁) aus der ermittelten Radlast (r₁) der Reifenluftdruck (d₁) bestimmt wird.

## Claims

1. Method for determining the tyre pressure and the wheel load of vehicle tyres by evaluating the measurement signals supplied by at least one deformation sensor embedded in the vehicle tyre, **characterized by** the method steps:
A) the respective signal profiles are recorded for a predefined type of tyre with variation and measurement of the tyre pressure, the wheel load and the spring compression as the deformation sensor passes through the tyre contact area, and the signal curve widths (s) between zero crossovers of the signal profile together with the minimum values (a) of the amplitude of the signal profile are recorded;
B) the following characteristic diagrams are acquired from the data which is obtained:
K1) spring compression (e) plotted against the signal curve width (s);
K2) wheel load (r) plotted against the minimum values (a) of the amplitude;
K3) tyre pressure (d) plotted against the minimum values (a) of the amplitude;
C) during the current measuring process,
C1) the spring compression (e₁) is determined from the signal curve width (s₁) in the characteristic diagram K1;
C2) the wheel load (r₁) is determined from the minimum value (a₁) of the amplitude of the signal profile in the characteristic diagram K2 for the detected spring compression (e₁) ;
C3) the tyre pressure (d₁) is determined from the minimum value (a₁) of the amplitude of the signal profile in the characteristic diagram K3 for the detected spring compression (e₁).

2. Method according to Claim 1, **characterized in that** in addition a characteristic diagram K4 of the wheel load (r) plotted against the tyre pressure (d) is recorded in the method step B), and **in that** the tyre pressure (d₁) for the respective spring compression (e₁) is determined from the wheel load (r₁) which is obtained in the method step C.

## Revendications

1. Procédé pour déterminer la pression d'air d'un pneumatique et la charge de roue des pneumatiques d'un véhicule en interprétant les signaux de mesure délivrés par au moins un capteur de déformation intégré dans le pneumatique de véhicule, **caractérisé par** les étapes :
A) pour un type de pneumatique donné, les tracés du signal correspondants sont enregistrés lorsque le capteur de déformation passe à travers l'aplatissement du pneumatique en faisant varier et en mesurant la pression d'air du pneumatique, la charge de roue et le débattement du ressort et les largeurs des courbes de signal (s) entre les passages à zéro du tracé du signal ainsi que les minima d'amplitude (a) du tracé du signal sont enregistrés ;
B) les diagrammes caractéristiques suivants sont obtenus à partir des données déterminées :
K1) débattement du ressort (e) en fonction de la largeur de la courbe de signal (s) ;
K2) charge de roue (r) en fonction des minima d'amplitude (a) ;
K3) pression d'air du pneumatique (d) en fonction des minima d'amplitude (a) ;
C) lors du processus de mesure actuel,
C1) le débattement du ressort (e₁) est déterminé à partir de la largeur de la courbe de signal (s₁) dans le diagramme caractéristique K1 ;
C2) la charge de roue (r₁) pour le débattement de ressort (e₁) constaté est déterminée dans le diagramme caractéristique K2 à partir du minimum d'amplitude (a₁) du tracé du signal ;
C3) la pression d'air du pneumatique (d₁) pour le débattement de ressort (e₁) constaté est déterminée dans le diagramme caractéristique K3 à partir du minimum d'amplitude (a₁) du tracé du signal.

2. Procédé selon la revendication 1, **caractérisé en ce qu'**un diagramme caractéristique K4 de la charge de roue (r) en fonction de la pression d'air du pneumatique (d) est enregistré en plus dans l'étape B) et que dans l'étape C), la pression d'air du pneumatique (d₁) pour le débattement de ressort (e₁) correspondant est déterminée à partir de la charge de roue (r₁) déterminée.
